# EUROPÄISCHE PATENTSCHRIFT

(11) **EP 3 608 213 B1**
(45) Veröffentlichungstag und Bekanntmachung des Hinweises auf die Patenterteilung: **01.09.2021**
(21) Anmeldenummer: 19172877.3
(22) Anmeldetag: 07.05.2019
(51) Int. Cl.: B60R 21/13, B62D 33/06, B60R 21/00, B62D 21/15

(54) **LANDWIRTSCHAFTLICHE ARBEITSMASCHINE**
AGRICULTURAL MACHINE
MACHINE DE TRAVAIL AGRICOLE

(30) Priorität: 25.07.2018 DE 102018005874
(43) Veröffentlichungstag der Anmeldung: 12.02.2020
(73) Patentinhaber: CLAAS Selbstfahrende Erntemaschinen GmbH, 33428 Harsewinkel (DE)
(72) Erfinder: Nübel, Thomas, 33428 Harsewinkel (DE); Mühlenhoff, Kai, 49143 Bissendorf (DE)
(74) Vertreter: CLAAS Gruppe

(56) Entgegenhaltungen:
- EP-A1- 1 164 073
- DE-A1-102006 008 090
- DE-A1-102015 009 474
- DE-A1-102015 214 456
- FR-A1- 2 411 111

## Beschreibung

Die vorliegende Erfindung betrifft eine selbstfahrende landwirtschaftliche Arbeitsmaschine.

Landwirtschaftliche Arbeitsmaschinen sind häufig auf abschüssigem, unbefestigtem und eventuell nachgiebigem Untergrund im Einsatz, wo eine nicht zu vernachlässigende Wahrscheinlichkeit eines Unfalls durch Umkippen besteht. Ein erhöhtes Kipprisiko besteht etwa, wenn eine Arbeitsmaschine zum Verdichten von Silage durch Überfahren in einem Fahrsilo eingesetzt wird, da das Silagegut hier eine steile und eventuell instabile Böschung aufweisen kann. Beim Umkippen kann eine Fahrerkabine der Arbeitsmaschine in Kontakt mit dem Boden gelangen und zwischen diesem und dem Fahrgestell deformiert werden. Die Fahrerkabine muss robust genug konstruiert sein, um auch in einem solchen Fall den Fahrer wirksam zu schützen.

Die wirtschaftliche Notwendigkeit in der Landwirtschaft, große Flächen mit minimalem Personaleinsatz und in immer kürzerer Zeit zu bearbeiten, führt dazu, dass immer größere und deshalb auch schwerere Arbeitsmaschinen in den Feldeinsatz gelangen. Je schwerer die Arbeitsmaschinen sind, umso größer sind auch die Kräfte, denen bei einem Umkippen die Fahrerkabine zwischen Boden und Fahrgestell ausgesetzt sein kann. Dementsprechend werden die Anforderungen an die Formbeständigkeit der Fahrerkabine immer höher und immer schwieriger und aufwendiger zu erfüllen.

Auf dem Gebiet der Straßenfahrzeuge sind sogenannte Crashboxen seit langem gebräuchlich, um bei einer Kollision das Fahrgestell vor einer nur mit hohem Aufwand oder gar nicht reparierbaren Deformation zu schützen. Typischerweise sind die Crashboxen jeweils in Verlängerung von Längsträgern der Fahrzeugkarosserie angebracht und verbinden diese mit einem Stoßfänger-Querträger, um in Fahrzeuglängsrichtung gestaucht zu werden, wenn der Stoßfänger-Querträger bei einer Kollision ins Fahrzeuginnere gedrückt wird.

Aus DE 10 2009 032 734 A1 ist ein Nutzfahrzeug bekannt, bei dem ein Stoßfänger-Querträger einerseits in der oben beschriebenen Weise über Crashboxen an einem in Fahrtrichtung hinter ihm liegenden Fahrgestell abgestützt ist, sodass die Crashboxen gestaucht werden, wenn ein Pkw mit dem Stoßfänger-Querträger kollidiert. Andererseits ist eine Abstützeinheit um in Fahrzeugquerrichtung verlaufende Achsen mit dem Stoßfänger-Querträger und mit einer Fahrerkabine gelenkig verbunden, sodass, wenn bei einer Kollision mit einem anderen Nutzfahrzeug die Fahrerkabine erfasst und zurückgedrängt wird, die Crashboxen auf Dehnung beansprucht werden.
Die FR 2 411 111 A1 offenbart eine landwirtschaftliche Arbeitsmaschine gemäß dem Oberbegriff des Patentanspruchs 1. Aufgabe der vorliegenden Erfindung ist es, eine landwirtschaftliche Arbeitsmaschine zu schaffen, bei der die Fahrerkabine im Falle eines Umkippens verbesserten Schutz bietet.

Die Aufgabe wird gelöst, indem bei einer landwirtschaftlichen Arbeitsmaschine, bei der ein Fahrgestell ein erstes Karosserieteil und eine Fahrerkabine ein über dem ersten Karosserieteil angeordnetes zweites Karosserieteil bilden, zwischen den Karosserieteilen ein Zwischenraum vorgesehen ist und die Karosserieteile zwischen einer Ruhestellung und einer Belastungsstellung, in der der Zwischenraum (19) enger als in der Ruhestellung ist, beweglich miteinander verbunden sind, und mit wenigstens einem Verformungsenergie aufnehmenden Bauteil besagtes Bauteil in dem Zwischenraum angeordnet und durch eine Bewegung der Karosserieteile von der Ruhestellung in die Belastungsstellung komprimierbar ist. Indem das Bauteil in der Belastungsstellung einer äußeren Belastung unter Aufnahme von Verformungsenergie nachgibt, trägt es zu einer Verminderung der Biegespannungen bei, denen die Fahrerkabine nach einem Umkippen zwischen dem Boden und dem Fahrgestell ausgesetzt ist, und mindert so deren Deformation.

Als Verformungsenergie aufnehmendes Bauteil kommt eine Crashbox in Betracht. Von den Stoßfängern von Straßenfahrzeugen her bekannte Crashboxen sind optimiert, um über eine möglichst große Länge hinweg bei gleichmäßiger Kraftaufnahme gestaucht werden zu können. Dieselben Eigenschaften sind auch bei der erfindungsgemäßen Anwendung von Vorteil.

Das Verformungsenergie aufnehmende Bauteil weist der Fahrerkabine und dem Fahrgestell zugewandte Stirnwände und die Stirnwände verbindende, stauchbare Längswände auf, wobei sich hier die Längswände vorzugsweise nicht wie bei einem Stoßfänger horizontal in Fahrtrichtung, sondern in vertikaler Richtung erstrecken. Eine dieser Stirnwände kann unmittelbar durch dasjenige Karosserieteil gebildet sein, an dem das Bauteil befestigt ist; vorzugsweise ist sie jedoch ein von dem Karosserieteil getrenntes und an diesem anliegendes Bauteil.

Um ein reproduzierbares Stauchverhalten zu gewährleisten und insbesondere die Kraft zu begrenzen, die auf das Bauteil einwirken muss, um ein Einsetzen der Stauchung zu bewirken, ist es vorteilhaft, dass die stauchbaren Wände quer zur Stauchrichtung orientierte Sicken aufweisen.

Für eine wirtschaftliche Fertigung des Bauteils und für seine Belastbarkeit ist es günstig, wenn wenigstens zwei der stauchbaren Wände, vorzugsweise alle stauchbaren Wände, einteilig zusammenhängen und jeweils paarweise durch eine sich in der Stauchrichtung erstreckende Kante voneinander abgegrenzt sind.

Das Verformungsenergie aufnehmende Bauteil kann von einem der Bauteile, vorzugsweise dem zweiten Bauteil, in der Ruhestellung durch einen Spalt beabstandet sein, der in der Belastungsstellung geschlossen ist. Der Spalt gewährleistet so in der Ruhestellung eine Bewegungsfreiheit der Karosserieteile gegeneinander, die es erlaubt, die Fahrerkabine vor Erschütterungen des Fahrgestells abzuschirmen, die beim Überfahren von Bodenunebenheiten auftreten, sodass diese auch das die Verformungsenergie aufnehmende Bauteil nicht belasten. Erst wenn bei einem Unfall die Relativbewegung der zwei Karosserieteile gegeneinander so stark wird, dass der Spalt geschlossen wird, wird auch das Bauteil einer Belastung ausgesetzt. So kann einerseits die Fahrerkabine vor Stößen, die beim Fahren auf unebenem Untergrund auf das Fahrgestell einwirken, abgeschirmt werden, außerdem kann einer Materialermüdung des Bauteils, verursacht durch ständige schnelle Lastwechsel, vorgebeugt werden.

Um den Spalt in der Ruhestellung offen zu halten, sind die Karosserieteile vorzugsweise über eine Feder verbunden, die einer Verengung des Spalts entgegenwirkt.

Die Feder kann mit wenigstens einem der Karosserieteile über eine Sollbruchstelle verbunden sein, die ausgelegt ist, um vor Erreichen der Belastungsstellung zu brechen. So kann sichergestellt werden, dass im normalen Fahrbetrieb die Crashbox nicht belastet wird und erst dann wirksam wird, wenn die Belastung groß genug ist, um ein Versagen der Sollbruchstelle herbeizuführen.

Um eine Belastung der Crashbox im normalen Fahrbetrieb zu vermeiden, kann ferner die Stauchbarkeit der Feder durch einen Anschlag begrenzt sein, wobei dieser Anschlag so positioniert ist, dass die Belastungsstellung nur durch Überwinden des Anschlags erreichbar ist.

Das die Verformungsenergie aufnehmende Bauteil kann zweckmäßigerweise in einem Zwischenraum zwischen den Karosserieteilen angeordnet sein. So kann es insbesondere zuverlässig gestaucht werden, wenn durch die bei Unfall auftretenden Kräfte die Karosserieteile gegeneinandergedrückt werden.

Wenn die Fahrerkabine in an sich bekannter Weise ein Tragwerk mit einer Mehrzahl von untereinander verbundenen Leisten sowie Platten umfasst, die von den Leisten begrenzte Fächer des Tragwerks ausfüllen, dann sollte das die Verformungsenergie aufnehmende Bauteil, um die Verformung der Fahrerkabine zu minimieren, in der Belastungsstellung vorzugsweise zwischen dem Fahrwerk und einer Leiste der Fahrerkabine geklemmt sein.

Wenn die Fahrerkabine eine Bodenplatte aufweist und zwischen der Ruhestellung und der Belastungsstellung in eine Achse schwenkbar mit dem Fahrgestell verbunden ist, dann sollte das die Verformungsenergie aufnehmende Bauteil vorzugsweise zwischen einem achsfernen Rand der Bodenplatte und dem Fahrgestell angeordnet sein, um einer Auslenkung der Fahrerkabine mit großem Hebelarm entgegenwirken zu können.

Die Fahrerkabine und das Fahrgestell können über ein Scharnier verbunden sein; dann ist die Lage der Achse durch den Aufbau des Scharniers festgelegt. Denkbar ist aber auch, zwischen Fahrgestell und Fahrerkabine ein Kugelgelenk oder ein anderes die Lage der Achse nicht eindeutig vorgebendes Gelenk vorzusehen; in diesem Fall kann sich der Verlauf der Achse der Richtung, aus der eine Kraft auf die Fahrerkabine einwirkt, anpassen, d.h. die Orientierung der Achse kann variieren, je nachdem, an welchem Ort der Fahrerkabine ein Kontakt zum Boden zustande kommt.

Da sich die Fahrerkabine typischerweise in einem vorderen Bereich der Arbeitsmaschine befinden wird, ist die Wahrscheinlichkeit hoch, dass sie im Falle eines Umkippens einer entgegen der Fahrtrichtung wirkenden Kraftkomponente ausgesetzt ist. Um diese abfangen zu können, ist der axiale Rand vorzugsweise ein hinterer Rand der Bodenplatte.

Um aus seitlicher Richtung auf die Fahrerkabine einwirkende Kräfte abfangen zu können, egal von welcher Seite sie kommen, sollte die erfindungsgemäße Arbeitsmaschine ferner vorzugsweise wenigstens zwei Verformungsenergie aufnehmende Bauteile umfassen, die in Querrichtung des Fahrgestells voneinander beabstandet sind.

Wenn das Fahrgestell in an sich bekannter Weise zwei Längsträger umfasst, die sich in Querrichtung des Fahrgestells voneinander beabstandet unter der Fahrerkabine erstrecken, kann zwischen jedem der Längsträger und der Fahrerkabine je ein Verformungsenergie aufnehmendes Bauteil angeordnet sein. Die Erfindung ist insbesondere anwendbar bei Traktoren, Mähdreschern oder Feldhäckslern.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Seitenansicht einer landwirtschaftlichen Arbeitsmaschine gemäß einer ersten Ausgestaltung der Erfindung;
- Fig. 2: eine zu Figur 1 analoge Seitenansicht gemäß einer zweiten Ausgestaltung;
- Fig. 3: eine perspektivische Ansicht der Fahrerkabine und eines Teils des Fahrgestells.
- Fig. 4: einen schematischen Horizontalschnitt durch einen Zwischenraum zwischen einer Bodenplatte der Fahrerkabine und dem Fahrgestell der Arbeitsmaschine gemäß Fig. 1 oder 2; und
- Fig. 5: einen zu Fig. 4 analogen Schnitt gemäß einer zweiten Ausgestaltung.

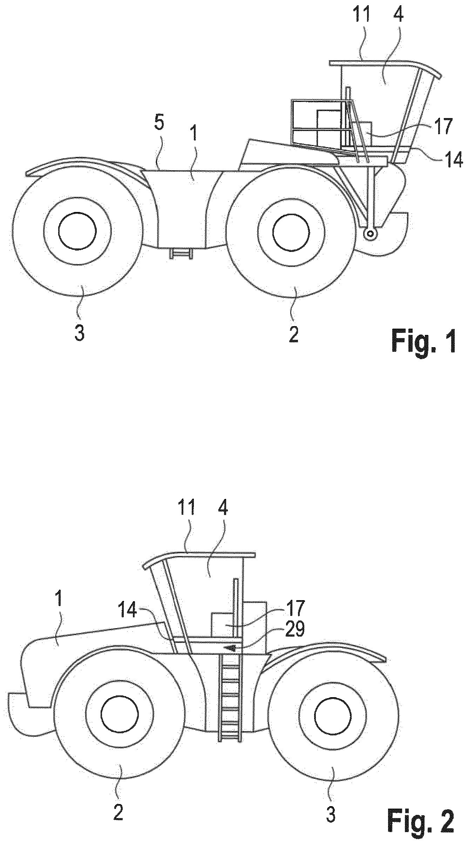

Fig. 1 zeigt eine Seitenansicht eines Traktors gemäß einer ersten Ausgestaltung der vorliegenden Erfindung. Auf einem Fahrgestell 1 mit Vorder- und Hinterrädern 2, 3 ist in über die Vorderachse nach vorn vorstehender Stellung eine Fahrerkabine 4 montiert. Hinter der Fahrerkabine 4 erstreckt sich eine Ladefläche 5, die Platz für Lasten oder Werkzeuge bietet. Insbesondere wenn die Ladefläche 5 wenig beladen ist, besteht, wenn der Traktor auf zu steil abschüssigen Untergrund gerät, die Möglichkeit, dass der Traktor vornüberkippt und mit der Vorderseite der Fahrerkabine 4 auf den Boden schlägt.

Fig. 2 zeigt eine Seitenansicht eines Traktors gemäß einer zweiten Ausgestaltung der vorliegenden Erfindung. Eine Fahrerkabine 4 ist hier auf einem Fahrgestell 1 in etwa mittig zwischen Vorder- und Hinterachsen positioniert. Ein Vornüberkippen ist hier in der Praxis kaum möglich; es besteht aber (wie auch im Fall der Fig. 1) die Möglichkeit, dass der Traktor auf seitwärts stark abschüssigem Untergrund zur Seite kippt, so dass am Ende eine Seitenwand der Fahrerkabine 4 den Boden berührt, oder er sich überschlägt und auf dem Dach der Fahrerkabine 4 liegenbleibt.

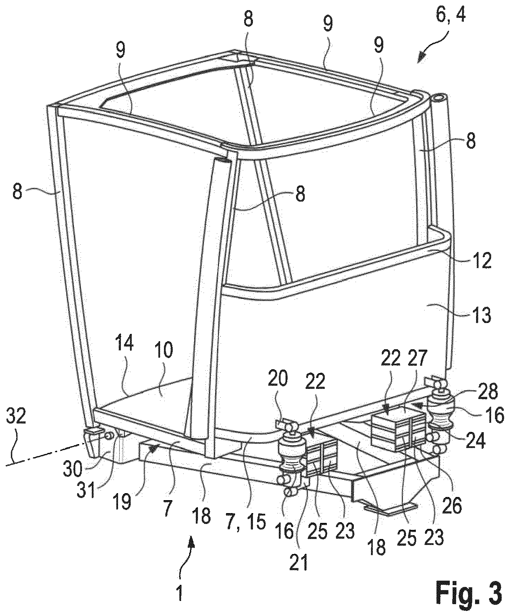

Fig. 3 zeigt ein Tragwerk 6 der Fahrerkabine 4 des Traktors aus Fig. 1 oder 2 sowie einen Ausschnitt seines Fahrgestells 1 in einer perspektivischen Ansicht.

Die Fahrerkabine 4 hat im Wesentlichen die Form eines Quaders, und Leisten 7, 8, 9 des Tragwerks 6 bilden die Kanten des Quaders und sind an dessen Ecken untereinander verbunden. Die Leisten 7 bilden einen Rahmen, der eine Bodenplatte 10 einfasst. Vertikale Leisten 8 begrenzen eine Türöffnung und bilden die Einfassung einer in Fig. 2 nicht gezeigten Frontscheibe. Horizontale Leisten 9 bilden einen Rahmen für eine Dachplatte 11 (s. Fig. 1 oder 2). Eine Rückwand der Fahrerkabine 4 ist durch eine horizontale Leiste 12 unterteilt in einen durch eine Platte 13 aus Blech ausgefüllten unteren Bereich und einen oberen Bereich, der eine in Fig. 3 nicht gezeigte Heckscheibe aufnimmt.

Die Bodenplatte 10 der Fahrerkabine 4 ist benachbart zu ihrem vorderen Rand 14 schwenkbar an das Fahrgestell 1 angelenkt. Zwischen einem hinteren Rand 15 der Bodenplatte 10 und dem Fahrgestell 1 sind Federn 16 angeordnet, um Schwingbewegungen der Fahrerkabine 4 zu ermöglichen, die im normalen Fahrbetrieb einen im hinteren Teil der Bodenplatte 10 angeordneten Fahrersitz 17 (s. Fig. 1, 2) vor Erschütterungen durch Bodenunebenheiten abschirmen.

Vom Fahrgestell 1 sind in Fig. 3 zwei Längsträger 18 gezeigt, die sich, durch einen Zwischenraum 19 von der Bodenplatte 10 getrennt, in Längsrichtung des Fahrgestells 1 unter der Fahrerkabine 4 her erstrecken. Die Bodenplatte 10 ist benachbart zu ihrem vorderen Rand 14 an den beiden Längsträgern 18 schwenkbar abgestützt. Die zwei am hinteren Rand 15 der Bodenplatte 10 angreifenden Federn 16 sind hier als Stoßdämpfer ausgebildet. Die Federn 16 sind in vertikaler Richtung stauchbar und an einem oberen Ende mit der Bodenplatte 10, hier zum Beispiel über jeweils einen an einer der Leisten 7 verankerten, über den hinteren Rand 15 überstehenden Arm 20, verankert. Ein unteres Ende der Federn 16 ist mit den Längsträgern 18 über von diesen seitwärts abstehende Arme 21 verbunden.

Die Längsträger 18 haben zum Beispiel einen DoppelT- oder Rechteckquerschnitt mit einer horizontalen Oberseite, auf der jeweils eine Crashbox 22 montiert ist. Die Crashboxen 22 sind hohle Quader mit Wänden aus Stahlblech. Die Crashboxen 22 haben jeweils vier Wände 23, die auf der Oberseite der Längsträger 18 senkrecht stehen und in vertikaler Richtung stauchbar sind. Die stauchbaren Wände 23 sind gebildet, indem ein rechteckiger Blechzuschnitt zu einem Vierkantrohr geformt und seine beiden kurzen Seiten 24 miteinander verschweißt sind, um einen geschlossenen Querschnitt zu bilden. Die Wände 23 sind hier jeweils mit quer zur Stauchrichtung verlaufenden Sicken 25 versehen, um die Faltenbildung der Wände 23 im Falle einer Stauchung vorzugeben und eine reproduzierbare, gleichmäßige Energieaufnahme beim Stauchen zu erzielen.

Obere und untere Ränder der stauchbaren Wände 23 sind jeweils mit Stirnwänden 26, 27 verschweißt, um zu verhindern, dass die stauchbaren Wände 23 entlang ihrer Ränder beim Stauchen seitwärts ausbrechen. Die untere Stirnwand 26 liegt auf jeweils auf einem der Längsträger 18 auf und ist an diesem in beliebiger, in der Figur nicht erkennbarer Weise, zum Beispiel durch Schrauben, Nieten oder Schweißung befestigt. Die obere Stirnwand 27 liegt frei und ist von dem sich darüber erstreckenden hinteren Rand 15 der Bodenplatte 10 durch einen von den Federn 16 offen gehaltenen Spalt 28 beabstandet.

Wenn bei einem Unfall der Traktor nach vorn oder zur Seite umkippt und die Fahrerkabine 4 auf den Boden aufschlägt, treten zwischen dem Fahrgestell 1 und der Fahrerkabine 4 erhebliche Drehmomente auf, die dazu führen können, dass wenigstens eine der Federn 16 soweit gestaucht wird, dass der hintere Rand 15 der Bodenplatte 10 an die Stirnwand 27 der zu dieser Feder 16 benachbarten Crashbox 22 anschlägt und die Crashbox 22 zusammendrückt. Um sicherzustellen, dass dies tatsächlich nur bei einem Unfall geschieht, kann die Bewegungsfreiheit der Federn 16 jeweils durch einen eingebauten Anschlag begrenzt sein, der beim Stauchen der Federn 16 erreicht wird, noch bevor die Bodenplatte 10 eine der Crashboxen 19 berührt.

Die Belastbarkeit der Arme 21, 22 ist ausreichend bemessen, um Kräfte auszuhalten, die auftreten können, wenn, zum Beispiel beim schnellen Überfahren einer Bodenunebenheit, die Federn 16 infolge der Trägheit der Fahrerkabine 4 bis zum Anschlag ausgelenkt werden. Im Falle des Umkippens können erheblich höhere Kräfte auftreten, da in diesem Fall die Fahrerkabine 4 in Kontakt mit dem Boden zum Stillstand kommt, und die Federn 16 einer Trägheits- oder Gewichtskraft des im Vergleich zur Fahrerkabine 4 erheblich schwereren Fahrgestells 1 ausgesetzt sind. Wenn in dieser Situation einer der Arme 21, 22 bricht, ist die Bewegungsfreiheit von Fahrerkabine 4 und Fahrgestell 1 gegeneinander nicht mehr durch die Feder 16 eingeschränkt, sodass der hintere Rand 15 der Bodenplatte 10 auf die Stirnwand 27 trifft und die Crashbox 22 gestaucht wird. Durch diese Stauchung wird dem Fahrgestell 1 kontinuierlich Bewegungsenergie entzogen, sodass diese nicht mehr durch eine Deformation der Fahrerkabine 4 aufgebraucht werden muss. Die Wahrscheinlichkeit einer für den Fahrer gefährlichen Deformation der Fahrerkabine 4 kann so vermindert werden.

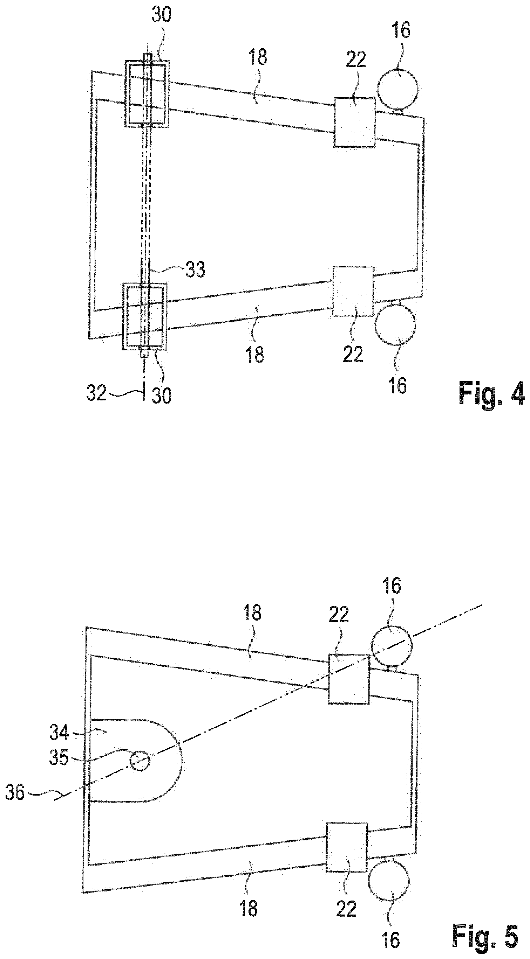

Fig. 4 zeigt einen schematischen Horizontalschnitt durch den Zwischenraum 19 zwischen der (in Fig. 4 nicht sichtbaren) Bodenplatte 10 und den Längsträgern 18. Benachbart zum vorderen Rand 14 der Bodenplatte 10 tragen die Längsträger 18 jeweils Fassungen 30 für zwei Lager 31, die die Fahrerkabine 4 um eine horizontal und in Querrichtung des Fahrgestells 1 verlaufende Achse 32 schwenkbar mit dem Fahrgestell 1 verbinden. Die Lager 31 können zum Beispiel durch Elastomerblöcke gebildet sein, die eine sich entlang der Achse 32 erstreckende und ortsfest mit der Fahrerkabine 4 verbundene Welle 33 aufnehmen. Wenn der Traktor vornüberkippt oder beim Umkippen auf dem Dach liegenbleibt, führt die Welle 33 eine Schwenkbewegung um die Achse 32 aus, bei der sich das Gewicht des Fahrgestells 1 auf beide Crashboxen 22 verteilt und diese gestaucht werden.

Wenn der Traktor lediglich auf der Seite liegenbleibt, führen die dabei auftretenden Kräfte dazu, dass die Welle 33 in einer der beiden Fassungen 30 den Elastomerkörper gegen den Längsträger 18 andrückt und ihn in der anderen Fassung 30 vom Längsträger 18 fortzieht. Die daraus resultierende Kippbewegung der Fahrerkabine 4 relativ zum Fahrgestell 1 ermöglicht eine unterschiedlich starke Stauchung der beiden Crashboxen 22 und dadurch ebenfalls eine Entlastung der Fahrerkabine 4 von deformierenden Kräften.

Fig. 5 zeigt einen zu Fig. 4 analogen Schnitt gemäß einer abgewandelten Ausgestaltung. Die Federn 16 und Crashboxen 22 sind hier genauso angeordnet wie im Falle der Fig. 3. Die Fassungen 30 und die in ihnen aufgenommenen Elastomerblöcke sind ersetzt durch eine Auflagefläche 34 ähnlich der eines Sattelschleppers, mit einer zentralen Aussparung 35, in die ein (in der Fig. nicht gezeigter) von der Bodenplatte 10 der Fahrerkabine 4 nach unten abstehender Kugelkopf schwenkbar eingreift. Die Fahrerkabine 4 ist somit an drei Punkten unterstützt, einmal über den Kugelkopf und zum anderen über die beiden Federn 16. Wenn der Traktor beim Umkippen auf der Seite liegenbleibt, ermöglicht diese Lagerung eine Kippbewegung der Fahrerkabine 4 um eine Achse 36, die durch die Aussparung 35 und die nach dem Umkippen näher am Boden liegende der beiden Federn 16 verläuft. Dieser Achsverlauf ermöglicht eine effiziente Kraftübertragung auf die nach dem Umkippen oben liegende Feder 16 sowie, nachdem die Bodenplatte 10 mit der zu dieser Feder 16 benachbarten Crashbox 22 in Kontakt gelangt ist, eine effiziente Stauchung der Crashbox 22 und damit die Entlastung der Fahrerkabine 4 von einer erheblichen Menge an Deformationsenergie.

### Bezugszeichenliste

- 1: Fahrgestell
- 2: Vorderrad
- 3: Hinterrad
- 4: Fahrerkabine
- 5: Ladefläche
- 6: Tragwerk
- 7: Leiste
- 8: Leiste
- 9: Leiste
- 10: Bodenplatte
- 11: Dachplatte
- 12: Leiste
- 13: Platte
- 14: Vorderer Rand
- 15: Hinterer Rand
- 16: Feder
- 17: Fahrersitz
- 18: Längsträger
- 19: Zwischenraum
- 20: Arm
- 21: Arm
- 22: Crashbox
- 23: Stauchbare Wand
- 24: Kurze Seite
- 25: Sicke
- 26: Stirnwand
- 27: Stirnwand
- 28: Spalt
- 29: Zwischenraum
- 30: Fassung
- 31: Lager
- 32: Achse
- 33: Welle
- 34: Auflagefläche
- 35: Aussparung
- 36: Achse

## Patentansprüche

1. Landwirtschaftliche Arbeitsmaschine, bei der ein Fahrgestell (1) ein erstes Karosserieteil (1) und eine Fahrerkabine (4) ein über dem ersten Karosserieteil (1) angeordnetes zweites Karosserieteil (4) bilden, zwischen den Karosserieteilen (1, 4) ein Zwischenraum (19) vorgesehen ist und die Karosserieteile (1, 4) zwischen einer Ruhestellung und einer Belastungsstellung, in der der Zwischenraum (19) enger als in der Ruhestellung ist, beweglich miteinander verbunden sind, und wenigstens einem Verformungsenergie aufnehmenden Bauteil (22), wobei das Bauteil (22) in dem Zwischenraum (19) angeordnet und durch eine Bewegung der Karosserieteile (1, 4) von der Ruhestellung in die Belastungsstellung komprimierbar ist, **dadurch gekennzeichnet, dass** das Verformungsenergie aufnehmende Bauteil (22) eine Crashbox (22) ist und
die Crashbox (22) den Karosserieteilen (1, 4) zugewandte Stirnwände (27, 26) und die Stirnwände (27, 26) verbindende stauchbare Wände (23) aufweist und dass die stauchbaren Wände (23) sich in vertikaler Richtung erstrecken.

2. Landwirtschaftliche Arbeitsmaschine nach Anspruch 2, **dadurch gekennzeichnet, dass** die stauchbaren Wände (23) quer zur Stauchrichtung orientierte Sicken (25) aufweisen.

3. Landwirtschaftliche Arbeitsmaschine nach Anspruch 2, **dadurch gekennzeichnet, dass** wenigstens zwei der stauchbaren Wände (23) einteilig zusammenhängen und durch eine sich in der Stauchrichtung erstreckende Kante voneinander abgegrenzt sind.

4. Landwirtschaftliche Arbeitsmaschine nach einem der vorhergehenden Ansprüche, **dadurch gekennzeichnet, dass** das Bauteil (22) in der Ruhestellung vom einem der Karosserieteile (4) durch einen Spalt (28) beabstandet ist und der Spalt (28) in der Belastungsstellung geschlossen ist.

5. Landwirtschaftliche Arbeitsmaschine nach Anspruch 4, **dadurch gekennzeichnet, dass** die Karosserieteile (1, 4) über eine Feder (16) verbunden sind, die einer Verengung des Spalts (28) entgegenwirkt.

6. Landwirtschaftliche Arbeitsmaschine nach Anspruch 5, **dadurch gekennzeichnet, dass** die Feder (16) mit wenigstens einem der Karosserieteile (1, 4) über eine Sollbruchstelle verbunden ist, die ausgelegt ist, um vor Erreichen der Belastungsstellung zu brechen.

7. Landwirtschaftliche Arbeitsmaschine nach Anspruch 5 oder 6, **dadurch gekennzeichnet, dass** die Stauchbarkeit der Feder (16) durch einen Anschlag begrenzt ist, und dass die Belastungsstellung nur durch Überwinden des Anschlags erreichbar ist.

8. Landwirtschaftliche Arbeitsmaschine nach einem der vorhergehenden Ansprüche, **dadurch gekennzeichnet, dass** die Fahrerkabine (4) ein Tragwerk (6), das eine Mehrzahl von untereinander verbundenen Leisten (7, 8, 9, 12) umfasst, und Platten (10, 11, 13) umfasst, die von den Leisten (7, 8, 9, 12) begrenzte Fächer des Tragwerks (6) ausfüllen, und dass das Verformungsenergie aufnehmende Bauteil (22) in der Belastungsstellung zwischen dem Fahrwerk (1) und einer Leiste (7) der Fahrerkabine (4) geklemmt ist.

9. Landwirtschaftliche Arbeitsmaschine nach einem der vorhergehenden Ansprüche, **dadurch gekennzeichnet, dass** die Fahrerkabine (4) eine Bodenplatte (10) aufweist und zwischen der Ruhestellung und der Belastungsstellung um eine Achse (32, 36) schwenkbar mit dem Fahrgestell (1) verbunden ist, und dass das Verformungsenergie aufnehmende Bauteil (22) zwischen einem achsfernen Rand der Bodenplatte (10) und dem Fahrgestell (1) angeordnet ist.

10. Landwirtschaftliche Arbeitsmaschine nach Anspruch 9, **dadurch gekennzeichnet, dass** der achsferne Rand ein hinterer Rand (15) der Bodenplatte (10) ist.

11. Landwirtschaftliche Arbeitsmaschine nach einem der vorhergehenden Ansprüche, **dadurch gekennzeichnet, dass** sie wenigstens zwei Verformungsenergie aufnehmende Bauteile (22) umfasst, die in Querrichtung des Fahrgestells (1) voneinander beabstandet sind.

12. Landwirtschaftliche Arbeitsmaschine nach einem der vorhergehenden Ansprüche, **dadurch gekennzeichnet, dass** das Fahrgestell (1) zwei Längsträger (18) umfasst, die sich in Querrichtung des Fahrgestells (1) voneinander beabstandet unter der Fahrerkabine (4) erstrecken, und dass zwischen jedem der Längsträger (18) und der Fahrerkabine (4) je ein Verformungsenergie aufnehmendes Bauteil (22) angeordnet ist.

13. Landwirtschaftliche Arbeitsmaschine nach einem der vorhergehenden Ansprüche, **dadurch gekennzeichnet, dass** sie ein Traktor, ein Mähdrescher oder ein Feldhäcksler ist.

## Claims

1. An agricultural working machine in which a chassis (1) forms a first bodywork part (1) and a driver's cab (4) forms a second bodywork part (4) arranged above the first bodywork part (1), an intermediate space (19) is provided between the bodywork parts (1, 4) and the bodywork parts (1, 4) are connected together moveably between a rest position and a loading position in which the intermediate space (19) is narrower than in the rest position, and at least one deformation energy-absorbing component (22), wherein the component (22) is arranged in the intermediate space (19) and is compressible by a movement of the bodywork parts (1, 4) from the rest position into the loading position, **characterised in that** the deformation energy-absorbing component (22) is a crash box (22) and the crash box (22) has end walls (27, 26) facing towards the bodywork parts (1, 4) and compressible walls (23) connecting the end walls (27, 26), and that the compressible walls (23) extend in the vertical direction.

2. An agricultural working machine according to claim 1 **characterised in that** the compressible walls (23) have beads (25) oriented transversely relative to the compression direction.

3. An agricultural working machine according to claim 2 **characterised in that** at least two of the compressible walls (23) are connected together in one piece and are delimited from each other by a edge extending in the compression direction.

4. An agricultural working machine according to one of the preceding claims **characterised in that** the component (22) in the rest position is spaced by a gap from the one of the bodywork parts (4) and the gap (28) is closed in the loading position.

5. An agricultural working machine according to claim 4 **characterised in that** the bodywork parts (1, 4) are connected by way of a spring (16) which counteracts a reduction in the gap (28).

6. An agricultural working machine according to claim 5 **characterised in that** the spring (16) is connected to at least one of the bodywork parts (1, 4) by way of a predetermined breaking point which is adapted to break before the loading position is reached.

7. An agricultural working machine according to claim 5 or claim 6 **characterised in that** the compressibility of the spring (16) is limited by an abutment and that the loading position can be reached only by overcoming the abutment.

8. An agricultural working machine according to one of the preceding claims **characterised in that** the driver's cab (4) includes a support structure (6) including a plurality of interconnected bars (7, 8, 9, 12) and panels (10, 11, 13) which fill the compartments of the support structure (6), that are delimited by the bars (7, 8, 9, 12), and that the deformation energy-absorbing component (22) is clamped in the loading position between the chassis (1) and the bar (7) of the driver's cab (4).

9. An agricultural working machine according to one of the preceding claims **characterised in that** the driver's cab (4) has a floor panel (10) and is connected to the chassis (1) pivotably about an axis (32, 36) between the rest position and the loading position and that the deformation energy-absorbing component (22) is arranged between an edge of the floor panel (10) remote from the axis and the chassis (1).

10. An agricultural working machine according to claim 9 **characterised in that** the edge remote from the axis is a rear edge (15) of the floor panel (10).

11. An agricultural working machine according to one of the preceding claims **characterised in that** it includes at least two deformation energy-absorbing components (22) which are spaced from each other in the transverse direction of the chassis (1).

12. An agricultural working machine according to one of the preceding claims **characterised in that** the chassis (1) includes two longitudinal bearers (18) which extend under the driver's cab spaced from each other in the transverse direction of the chassis (1) and that a respective deformation energy-absorbing component (22) is arranged between each of the longitudinal bearers (18) and the driver's cab (4).

13. An agricultural working machine according to one of the preceding claims **characterised in that** it is a tractor, a combine harvester or a forage harvester.

## Revendications

1. Machine de travail agricole dans laquelle un châssis (1) forme une première partie de carrosserie (1) et une cabine de conduite (4) forme une seconde partie de carrosserie (4) disposée sur la première partie de carrosserie (1), entre les parties de carrosserie (1, 4) étant prévu un interstice (19), et les parties de carrosserie (1, 4) étant reliées entre elles de manière mobile entre une position de repos et une position de charge dans laquelle l'interstice (19) est plus étroit que dans la position de repos, et comprenant au moins un élément structurel (22) absorbant de l'énergie de déformation, l'élément structurel (22) étant disposé dans l'interstice (19) et pouvant être comprimé de la position de repos vers la position de charge par un déplacement des parties de carrosserie (1, 4), **caractérisée en ce que** l'élément structurel (22) absorbant l'énergie de déformation est un absorbeur de chocs (22) et l'absorbeur de chocs (22) comporte des parois frontales (27, 26) tournées vers les parties de carrosserie (1, 4) et des parois écrasables (23) reliant les parois frontales (27, 26), et **en ce que** les parois écrasables (23) s'étendent dans la direction verticale.

2. Machine de travail agricole selon la revendication 2, **caractérisée en ce que** les parois écrasables (23) comportent des moulures (25) orientées transversalement à la direction d'écrasement.

3. Machine de travail agricole selon la revendication 2, **caractérisée en ce qu'**au moins deux des parois écrasables (23) sont réunies d'un seul tenant et sont délimitées l'une par rapport à l'autre par une arête s'étendant dans la direction d'écrasement.

4. Machine de travail agricole selon une des revendications précédentes, **caractérisée en ce que**, dans la position de repos, l'élément structurel (22) est tenu à distance d'une des parties de carrosserie (4) par l'intermédiaire d'un intervalle (28) et, dans la position de charge, l'intervalle (28) est fermé.

5. Machine de travail agricole selon la revendication 4, **caractérisée en ce que** les parties de carrosserie (1, 4) sont reliées par l'intermédiaire d'un ressort (16) qui s'oppose à un rétrécissement de l'intervalle (28).

6. Machine de travail agricole selon la revendication 5, **caractérisée en ce que** le ressort (16) est relié à au moins une des parties de carrosserie (1, 4) par l'intermédiaire d'un point de rupture privilégié qui est conçu pour rompre avant que la position de charge ne soit atteinte.

7. Machine de travail agricole selon la revendication 5 ou 6, **caractérisée en ce que** la capacité d'écrasement du ressort (16) est limitée par une butée, et **en ce que** la position de charge n'est atteignable qu'en surmontant la butée.

8. Machine de travail agricole selon une des revendications précédentes, **caractérisée en ce que** la cabine de conduite (4) inclut un ensemble porteur (6), qui inclut une pluralité de barres (7, 8, 9, 12) reliées entre elles, et des panneaux (10, 11, 13) qui comblent des compartiments de l'ensemble porteur (6) délimités par les barres (7, 8, 9, 12), et **en ce que**, dans la position de charge, l'élément structurel (22) absorbant l'énergie de déformation est coincé entre le châssis (1) et une barre (7) de la cabine de conduite (4).

9. Machine de travail agricole selon une des revendications précédentes, **caractérisée en ce que** la cabine de conduite (4) comporte un panneau de plancher (10) et est reliée au châssis (1) de manière pivotante autour d'un axe (32, 36) entre la position de repos et la position de charge, et **en ce que** l'élément structurel (22) absorbant l'énergie de déformation est disposé entre un bord du panneau de plancher (10) éloigné de l'axe et le châssis (1).

10. Machine de travail agricole selon la revendication 9, **caractérisée en ce que** le bord éloigné de l'axe est un bord arrière (15) du panneau de plancher (10).

11. Machine de travail agricole selon une des revendications précédentes, **caractérisée en ce qu'**elle inclut au moins deux éléments structurels (22) absorbant de l'énergie de déformation, lesquels sont distants l'un de l'autre dans la direction transversale du châssis.

12. Machine de travail agricole selon une des revendications précédentes, **caractérisée en ce que** le châssis (1) inclut deux longerons (18) qui s'étendent sous la cabine de conduite (4) à distance l'un de l'autre dans la direction transversale du châssis (1), et **en ce qu'**entre chacun des longerons (18) et la cabine de conduite (4) est disposé un élément structurel (22) absorbant de l'énergie de déformation.

13. Machine de travail agricole selon une des revendications précédentes, **caractérisée en ce qu'**elle est un tracteur, une moissonneusebatteuse ou une ensileuse.
